# EUROPEAN PATENT APPLICATION

(11) **EP 4 498 231 A1**
(43) Date of publication of application: **29.01.2025**
(21) Application number: 24186290.3
(22) Date of filing: 03.07.2024
(51) Int. Cl.: G06F 8/41, G06F 8/60, G06F 8/658, G06N 3/10

(54) **ELECTRONIC DEVICE AND METHOD FOR HANDLING ARTIFICIAL INTELLIGENCE MODEL SWITCHING**

(30) Priority: 27.07.2023 US 202363515846 P; 23.06.2024 US 202418751335
(71) Applicant: MediaTek Inc., Hsin-Chu 300 (TW)
(72) Inventor: HSU, Chia-Wei, 30078 Hsinchu City (TW); LU, Yu-Lung, 30078 Hsinchu City (TW); CHIANG, Yen-Ting, 30078 Hsinchu City (TW); CHEN, Chih-Wei, 30078 Hsinchu City (TW); LU, Yi-Cheng, 30078 Hsinchu City (TW); HONG, Jia-Sian, 30078 Hsinchu City (TW); CHEN, Kuan-Yu, 30078 Hsinchu City (TW); TSUNG, Pei-Kuei, 30078 Hsinchu City (TW); WU, Hua, 30078 Hsinchu City (TW)
(74) Representative: Hoefer & Partner Patentanwälte mbB

(57) **Abstract**

An electronic device is configured to execute instructions: compiling a first AI model and second AI model (s) to a first compiled file and second compiled file(s), respectively, wherein the first compiled file comprises a first data set and a first command set, and the second compiled file(s) comprises second data set(s) and second command set(s) (S202); generating light version file(s) for the AI model(s), wherein the light version file(s) comprises the second command set(s) and data patch(es) (S204); storing the first compiled file and the light version file (s) to a storage device (5206) ; loading the first compiled file from the storage device to a memory (S208); loading the light version file(s) from the storage device to the memory (S210); generating the second data set(s) according to the first data set and the data patch(es) (S212); and executing the second AI model (s) according to the generated second data set (s) and the second command set(s) in the memory (S216).

## Description

### Cross Reference to Related Applications

This application claims the benefit of U.S. Provisional Application No. 63/515,846, filed on July 27th, 2023. The content of the application is incorporated herein by reference.

### Background

An artificial intelligence (AI) model is a program that has been trained on a set of data to recognize certain patterns or make certain decisions without human intervention. The AI model consists of two main components: commands for hardware (e.g., neural-network processing unit (NPU) or graphic processing unit (GPU)) of an electronic device to execute; and data used as the weights and quantization parameters of the AI model. The sizes of some AI models become larger result from the growth of the AI models, and these AI models with similar weights have re-trained or fine-tuned to cater to different applications and offer various styles for users. Therefore, there is a need for the electronic device to switch between these AI models to meet various application requirements.

### Summary

It is an objective of the disclosure to provide an electronic device and a method, in order to handle artificial intelligence (AI) model switching. Electronic devices and methods according to the invention are defined in the independent claims. The dependent claims define preferred embodiments thereof.

An embodiment of the disclosure provides an electronic device. The electronic device comprises a storage device, a memory and a processing circuit. The processing circuit coupled to the storage device and the memory is configured to execute instructions of: compiling a first AI model and at least one second AI model to a first compiled file and at least one second compiled file, respectively, wherein the first compiled file comprises a first data set and a first command set, and the at least one second compiled file comprises at least one second data set and at least one second command set; generating at least one light version file for the at least one second AI model according to the first compiled file and the at least one second compiled file, wherein the at least one light version file comprises the at least one second command set and at least one data patch; storing the first compiled file and the at least one light version file to the storage device; loading the first compiled file from the storage device to the memory during inferring the first AI model; loading the at least one light version file from the storage device to the memory during inferring the at least one second AI model; generating the at least one second data set according to the first data set and the at least one data patch in the memory; and executing the at least one second AI model according to the generated at least one second data set and the at least one second command set in the memory.

An embodiment of the disclosure provides an electronic device. The electronic device comprises a storage device, a memory and a processing circuit. The processing circuit coupled to the storage device and the memory is configured to execute instructions of: compiling a first AI model and at least one second AI model to a first compiled file and at least one second compiled file, respectively, wherein the first compiled file comprises a first data set and a first command set, the at least one second compiled file comprises at least one second data set and at least one second command set, and the first data set and the at least one second data set are the same; generating at least one light version file for the at least one second AI model according to the at least one second compiled file, wherein the at least one light version file comprises the at least one second command set; storing the first compiled file and the at least one light version file to the storage device; loading the first compiled file from the storage device to the memory during inferring the first AI model; loading the at least one light version file from the storage device to the memory during inferring the at least one second AI model; getting the first data set in the memory; and executing the at least one second AI model according to the first data set and the at least one second command set in the memory.

An embodiment of the disclosure provides a method for handling AI model switching for an electronic device. The method comprises: compiling a first AI model and at least one second AI model to a first compiled file and at least one second compiled file, respectively, wherein the first compiled file comprises a first data set and a first command set, and the at least one second compiled file comprises at least one second data set and at least one second command set; generating at least one light version file for the at least one second AI model according to the first compiled file and the at least one second compiled file, wherein the at least one light version file comprises the at least one second command set and at least one data patch; storing the first compiled file and the at least one light version file to a storage device in the electronic device; loading the first compiled file from the storage device to a memory in the electronic device during inferring the first AI model; loading the at least one light version file from the storage device to the memory during inferring the at least one second AI model; generating the at least one second data set according to the first data set and the at least one data patch in the memory; and executing the at least one second AI model according to the generated at least one second data set and the at least one second command set in the memory.

These and other objectives of the present invention will no doubt become obvious to those of ordinary skill in the art after reviewing the following detailed description of the preferred embodiment that is illustrated in the various figures and drawings.

### Brief Description of the Drawings

FIG. 1 is a schematic diagram of an electronic device according to an embodiment of the disclosure.
FIG. 2 is a flowchart of a process according to an embodiment of the disclosure.
FIG. 3 is a schematic diagram of a scenario according to an embodiment of the disclosure.
FIG. 4 is a schematic diagram of a scenario according to an embodiment of the disclosure.
FIG. 5 is a schematic diagram of a scenario according to an embodiment of the disclosure.
FIG. 6 is a schematic diagram of a scenario according to an embodiment of the disclosure.
FIG. 7 is a flowchart of a process according to an embodiment of the disclosure.
FIG. 8 is a schematic diagram of a scenario according to an embodiment of the disclosure.
FIG. 9 is a schematic diagram of a scenario according to an embodiment of the disclosure.

### Detailed Description

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

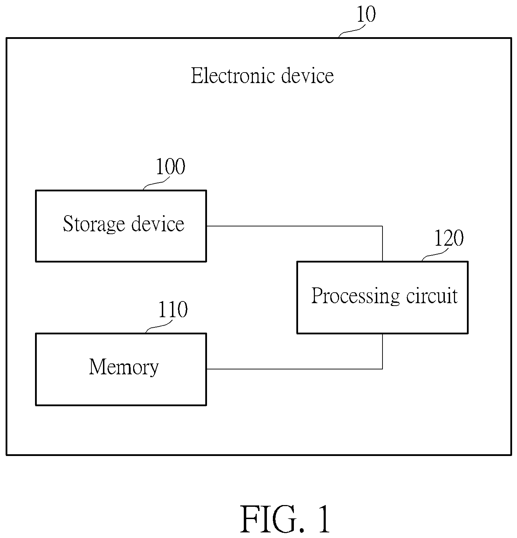

FIG. 1 is a schematic diagram of an electronic device 10 according to an embodiment of the disclosure. The electronic device 10 includes a storage device 100, a memory 110 and a processing circuit 120. The storage device 100 is configured to store data for long periods of time. Examples of the storage device 100 include but are not limited to an optical data storage device, a hard disk (such as, solid state disk (SSD)), an USB flash disk, a subscriber identity module (SIM) card, a secure digital(SD) card, etc. The memory 110 is configured to store data temporarily. Examples of the memory 110 include but are not limited to a flash memory (such as, Cache), a random-access memory (RAM) (such as, a dynamic RAM (DRAM), a static random-access memory (SRAM), a synchronous DRAM (SDRAM), double data rate SDRAM (DDR SDRAM), etc.), etc. The processing circuit 120 is coupled to the storage device 100 and the memory 110, and is configured to execute instructions to perform various tasks (e.g., compiling programs, basic software operations and/or complex calculations). Preferably, the processing circuit 120 is configured to handle artificial intelligence (AI) model switching (such as, the process 20 or the process 70 mentioned below, and their variants) in the electronic device 10.

The electronic device 10 may be an UE, a device-to-device (D2D) communication device, a peripheral component interconnect express (PCIe) device, an Internet of Thing (IoT) device, a mobile phone, a laptop, a tablet computer, a smart watch, an electronic book, a portable computer system, a vehicle, a ship or an aircraft, but is not limited herein.

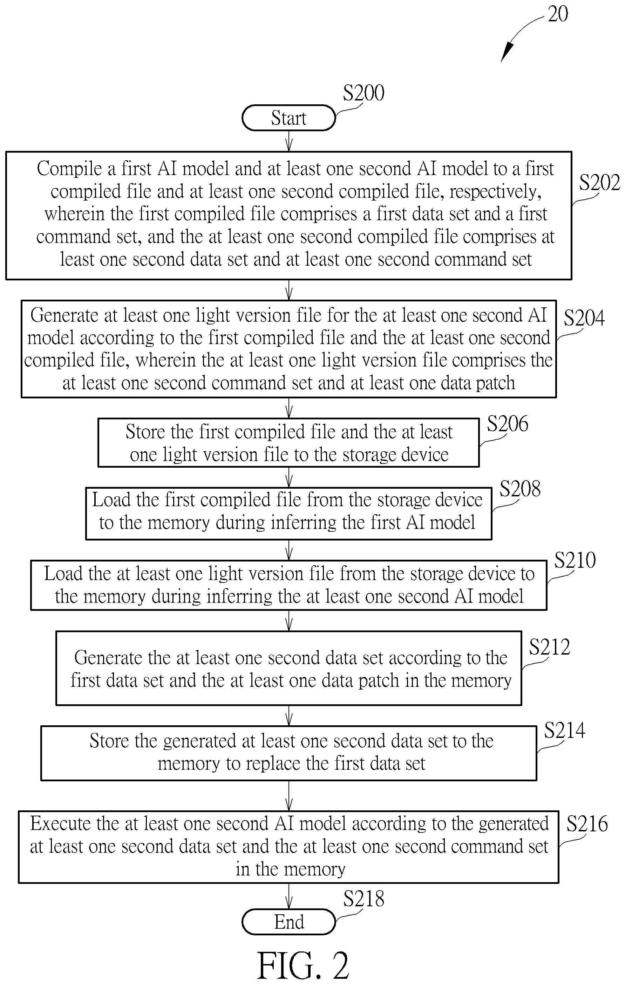

FIG. 2 is a flowchart of a process 20 utilized in an electronic device (e.g., the electronic device 10 in FIG. 1, and more particularly, a processing circuit 120 in the electronic device 10) according to an embodiment of the disclosure, to handling artificial intelligence (AI) model switching. Provided that the result is substantially the same, the steps are not required to be executed in the exact order shown in FIG. 2. The process 20 comprises the following steps:
Step S200: Start.
Step S202: Compile a first AI model (e.g., an original/main AI model) and at least one second AI model (e.g., at least one replaced AI model) to a first compiled file and at least one second compiled file, respectively, wherein the first compiled file comprises a first data set and a first command set, and the at least one second compiled file comprises at least one second data set and at least one second command set.
Step S204: Generate at least one light version file for the at least one second AI model according to the first compiled file and the at least one second compiled file, wherein the at least one light version file comprises the at least one second command set and at least one data patch.
Step S206: Store the first compiled file and the at least one light version file to the storage device.
Step S208: Load the first compiled file from the storage device to the memory during inferring (e.g., inferencing) the first AI model.
Step S210: Load the at least one light version file from the storage device to the memory during inferring (e.g., inferencing) the at least one second AI model.
Step S212: Generate (or obtain) the at least one second data set according to the first data set and the at least one data patch in the memory, e.g., if there is a need to switch the first AI model to the at least one second AI model.
Step S214: Store the generated at least one second data set to the memory to replace the first data set.
Step S216: Execute the at least one second AI model according to the generated at least one second data set and the at least one second command set in the memory.
Step S218: End.

The processing circuit in the electronic device is configured to perform steps of the process 20. According to the process 20, the processing circuit in the electronic device loads the at least one data patch which is comprised in the at least one light version file instead of the at least one second data set. An overhead of the electronic device to switch AI models can be reduced, because a size of the at least one data patch is smaller than a size of the at least one second data set (such as weights). It should be noted that step S214 can be skipped or be executed after step S216.

Realization of the process 20 is not limited to the above description. The following embodiments of the disclosure and/or preferred features, which may be combined in any suitable way to or with an embodiment of the disclosure, may be applied to realize the process 20.

Preferably, the first AI model (e.g., an original/main AI model) comprises the first data set, a first size list and the first command set. Preferably, the at least one second AI model comprises the at least one second data set, at least one second size list and the at least one second command set. In detail, each of the at least one second AI model comprises one data set, one size list and one command set and different second AI model may comprise different data set or command set, if the number of the at least one second AI model is more than one. The at least one second AI model comprises one data set, one size list and one command set, if the number of the at least one second AI model is one. Preferably, the first command set and the at least one second command set are the same. Alternatively preferably, the first command set and each of the at least one second command set are different.

Preferably, the first size list indicates sizes of data in the first data set. Preferably, each of the at least one second size list indicates a size of data in the at least one second data set. Preferably, the first size list and the at least one second size list are utilized for comparing the data in the first data set and the data in the at least one second data set. Preferably, the data in the first data set correspond to commands in the first command set, respectively. Preferably, the data in the at least one second data set correspond to commands in the at least one second command set, respectively.

Preferably, the processing circuit in the electronic device generates the at least one data patch according to the first data set and the at least one second data set during inferring (e.g., inferencing) the at least one second AI model. Preferably, the at least one data patch comprises at least one first data patch (e.g., first binary data patch). Preferably, the at least one first data patch indicates at least one first difference between the first data set and the at least one second data set, and is utilized for changing the first data set to the at least one second data set. Preferably, the at least one data patch further comprises at least one second data patch (e.g., second binary data patch), and the at least one second data patch indicates at least one second difference between the at least one second data set and the first data set, and is utilized for changing the at least one second data set to the first data set.

Preferably, the at least one data patch (i.e., the at least one first data patch and/or the at least one second data patch) indicates no difference between the first data set and the at least one second data set, if the first data set is the same as the at least one second data set.

Preferably, the first data set and the at least one second data set share the same memory space. That is, the memory space stores one of the first data set and the at least one second data set in different runtimes during which the inferences of the first AI model and the at least one second AI model are inferred. For example, the first data set is stored in a memory space in a first runtime (during the first runtime, inferring the first AI Model), before switching the first AI model to the at least one second AI model. The at least one second data set is stored in the same memory space to replace the first data set in a second runtime (during the second runtime, inferring the at least one second AI Model), after the at least one second data set is generated. Preferably, the first command set and the at least one second command set are stored (or loaded) separately. For example, the first command set is stored in a space of the memory, and each of the at least one second command set is stored in a different space of the memory. Preferably, a first runtime for inferring the first AI model is different from at least one second runtime for inferring the at least one second AI model.

Preferably, the processing circuit in the electronic device generates (or recovers) the first data set according to the at least one second data set and the at least one second data patch after executing the at least one second AI model, e.g., if there is a need to switch back to the first AI model from the at least one second AI model. Preferably, the processing circuit in the electronic device stores the first data set to the memory to replace the at least one second data set, after generating the first data set according to the at least one second data set and the at least one second data patch; and executes the first AI model according to the stored first data set and the first command set in the memory. That is, the first data set is recovered and replaces the at least one second data set, when there is a need to switch back the first AI model from the at least one second AI model.

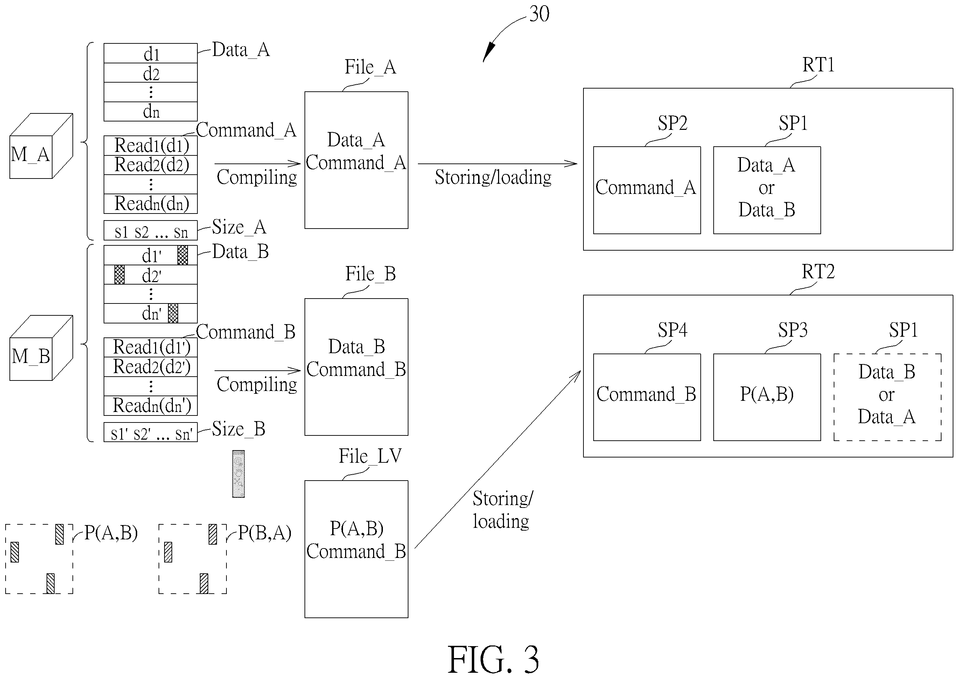

FIG. 3 is a schematic diagram of a scenario 30 according to an embodiment of the disclosure. In FIG. 3, there are two models M_A and M_B. The model M_A can be seen as an original/main AI model, and the model M_B can be seen as a replaced AI model. The model M_A comprises a data set Data_A with data d₁-dₙ, a size list Size_A with sizes s₁-sₙ and a command set Command_A with commands Read₁(d₁)-Readₙ(dₙ). The model M_B comprises a data set Data_B with data d₁'-dₙ', a size list Size_B with sizes s₁'-sₙ' and a command set Command_B with commands Read₁(d₁')-Readₙ(dₙ'). The data set Data_A is different from the data set Data_B, while the command set Command_A is the same as the command set Command_B. The slash parts of the data set Data_B represent differences between the data sets Data_A and Data_B. In FIG. 3, there are four memory spaces SP1-SP4 of a memory in an electronic device and two runtimes RT1 and RT2.

First, the electronic device (e.g., a processing circuit in the electronic device) compiles the models M_A and M_B to compiled files File_A and File_B, respectively. The compiled file File_A comprises the data set Data_A and the command set Command_A, and the compiled file File_B comprises the data set Data_B and the command set Command_B. The electronic device generates data patches P(A,B) and P(B,A) according to the data sets Data_A and Data_B (e.g., the slash parts of the data set Data_B) . The data patch P (A, B) is a binary data patch that changes the data set Data_A to the data set Data_B. The data patch P(B,A) is a binary data patch that changes the data set Data_B to the data set Data_A. The electronic device generates a light version file File_LV according to the compiled files File_A and File_B. The light version file File_LV comprises the data patch P(A,B) and the command set Command_B. The electronic device stores the compiled file File_A, the light version file File_LV and the data patch P(B,A) to a storage device (not shown) in the electronic device.

Then, the electronic device loads the compiled file File_A from the storage device to the memory in the runtime RT1 during inferring the model M_A. Specifically, the data set Data_A and the command set Command_A are loaded to (or stored in) the memory spaces SP1 and SP2, respectively. The electronic device optionally executes the model M_A according to the data set Data_A and the command set Command_A. The electronic device loads the light version file File_LV from the storage device to the memory in the runtime RT2 during inferring the model M_B. Specifically, the data patch P(A,B) and the command set Command_B are loaded to (or stored in) the memory spaces SP3 and SP4, respectively. The electronic device generates the data set Data_B according to the loaded data set Data_A and the data patch P(A,B), if there is a need to switch the model M_A to the model M_B. The electronic device replaces the data set Data_A with the data set Data_B in the memory space SP1, and executes the model M_B according to the data set Data_B in the memory space SP1 and the command set Command_B in the memory space SP4.

Further, as an alternative, the electronic device loads data patch P (B,A) from the storage device to a memory space SP5 (not shown) of the memory and generates (or recovers) the data set Data_A according to the data set Data_B in the memory space SP1 and the data patch P(B,A) in the memory space SP5, if there is a need to switch back to the model M_A from the model M_B. The electronic device replaces the data set Data_B with the data set Data_A in the memory space SP1, and executes the model M_A according to the data set Data_A in the memory space SP1 and the command set Command_A in the memory space SP2.

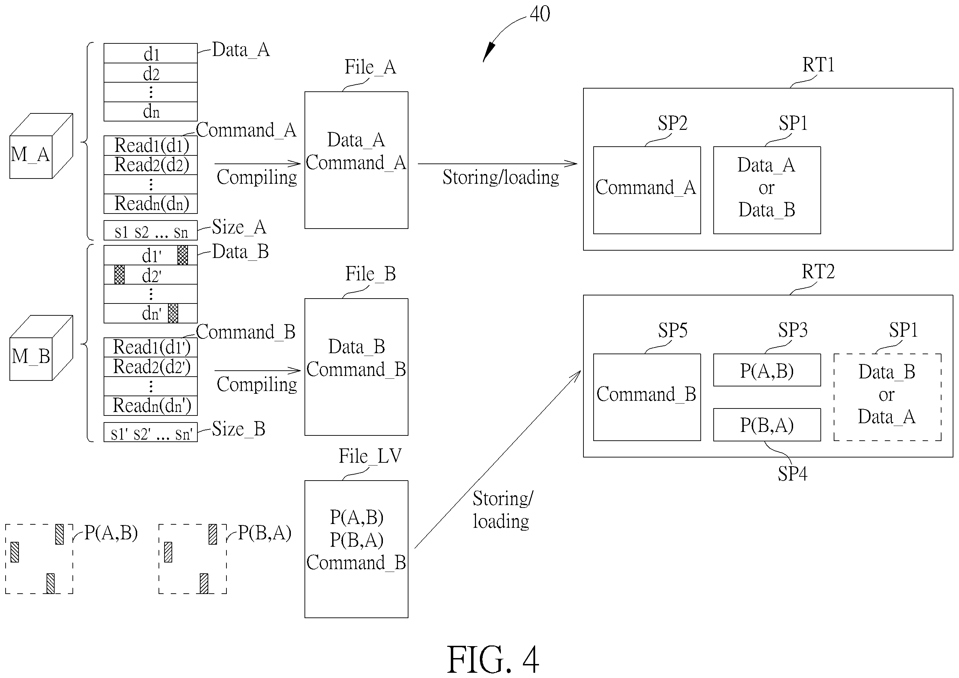

FIG. 4 is a schematic diagram of a scenario 40 according to an embodiment of the disclosure. In FIG. 4, there are two models M_A and M_B. The model M_A can be seen as an original/main AI model, and a model M_B can be seen as a replaced AI model. The models M_A and M_B can be referred to the models M_A and M_B in FIG. 3, and are not narrated herein for brevity. In FIG. 4, there are five memory spaces SP1-SP5 of a memory in an electronic device and two runtimes RT1 and RT2.

First, the electronic device (e.g., a processing circuit in the electronic device) compiles the models M_A and M_B to compiled files File_A and File_B, respectively. The compiled file File_A comprises the data set Data_A and the command set Command_A, and the compiled file File_B comprises the data set Data_B and the command set Command_B. The electronic device generates data patches P(A,B) and P(B,A) according to the data sets Data_A and Data_B (e.g., the slash parts of the data set Data_B) . The data patch P (A, B) is a binary data patch that changes the data set Data_A to the data set Data_B. The data patch P(B,A) is a binary data patch that changes the data set Data_B to the data set Data_A. The electronic device generates a light version file File_LV according to the compiled files File_A and File_B. The light version file File_LV comprises the data patches P(A,B) and P(B,A) and the command set Command_B. The electronic device stores the compiled file File_A and the light version file File_LV to a storage device (not shown) in the electronic device.

Then, the electronic device loads the compiled file File_A from the storage device to the memory in the runtime RT1 during inferring the model M_A. Specifically, the data set Data_A and the command set Command_A are loaded to (or stored in) the memory spaces SP1 and SP2, respectively. The electronic device optionally executes the model M_A according to the data set Data_A and the command set Command_A. The electronic device loads the light version file File_LV from the storage device to the memory in the runtime RT2 during inferring the model M_B. Specifically, the data patches P(A,B) and P(B,A) and the command set Command_B are loaded to (or stored in) the memory spaces SP3, SP4 and SP5, respectively. The electronic device generates the data set Data_B according to the data set Data_A and the data patch P(A,B), if there is a need to switch the model M_A to the model M_B. The electronic device replaces the data set Data_A with the data set Data_B in the memory space SP1, and executes the model M_B according to the data set Data_B in the memory space SP1 and the command set Command_B in the memory space SP5.

Further, as an alternative, the electronic device generates (or recovers) the data set Data_A according to the data set Data_B in the memory space SP1 and the data patch P(B,A) in the memory space SP4, if there is a need to switch back to the model M_A from the model M_B. The electronic device replaces the data set Data_B with the data set Data_A in the memory space SP1, and executes the model M_A according to the data set Data_A in the memory space SP1 and the command set Command_A in the memory space SP2.

In FIGs. 3 and 4, the electronic device loads at least one data patch (such as, the data patch P(A,B)) which is comprised in the at least one light version file instead of the data set (such as, the data set Data_B). An overhead of the electronic device to switch AI models (such as, switch from the model M_A to the model M_B) can be reduced, because the size of the at least one data patch is smaller than the size of data set. Besides, the data sets Data_A and Data_B share the same memory space SP1 to further reduce the cost. That is, data in the memory space SP1 may be replaced by new data, if there is a need to switch AI models.

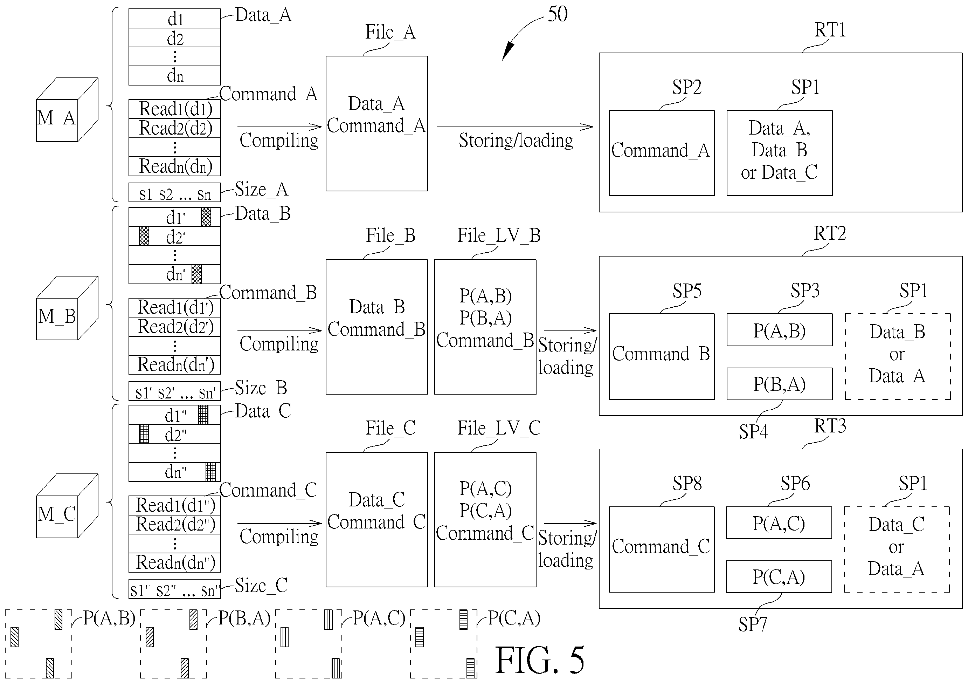

FIG. 5 is a schematic diagram of a scenario 50 according to an embodiment of the disclosure. In FIG. 5, there are three models M_A, M_B and M_C. The model M_A can be seen as an original/main AI model, and the models M_B and M_C can be seen as replaced AI models. The model M_A comprises a data set Data_A with data d₁-dₙ, a size list Size_A with sizes s₁-sₙ and a command set Command_A with commands Read₁(d₁)-Readₙ(dₙ). The model M_B comprises a data set Data_B with data d₁'-dₙ', a size list Size_B with sizes s₁'-sₙ' and a command set Command_B with commands Read₁(d₁')-Readₙ(dₙ') . The model M_C comprises a data set Data_C with the data d₁"-dₙ", a size list Size_C with the sizes s₁"-sₙ" and a command set Command_C with commands Read₁(d₁")-Readₙ(dₙ"). The data sets Data_A, Data_B and Data_C are different, while the command sets Command_A, Command_B and Command_C are the same. The slash parts of the data set Data_B represent differences between the data sets Data_A and Data_B. The slash parts of the data set Data_C represent differences between the data sets Data_A and Data_C. In FIG. 5, there are eight memory spaces SP1-SP8 of a memory in an electronic device and three runtimes RT1-RT3.

First, the electronic device (e.g., a processing circuit in the electronic device) compiles the models M_A, M_B and M_C to compiled files File_A, File_B and File_C, respectively. The compiled file File_A comprises the data set Data_A and the command set Command_A. The compiled file File_B comprises the data set Data_B and the command set Command_B. The compiled file File_C comprises the data set Data_C and the command set Command_C. The electronic device generates data patches P(A,B) and P(B,A) according to the data sets Data_A and Data_B (e.g., the slash parts of the data set Data_B). The data patch P(A,B) is a binary data patch that changes the data set Data_A to the data set Data_B. The data patch P(B,A) is a binary data patch that changes the data set Data_B to the data set Data_A. The electronic device generates data patches P(A,C) and P(C,A) according to the data sets Data_A and Data_C (e.g., the slash parts of the data set Data_C). The data patch P(A,C) is a binary data patch that changes the data set Data_A to the data set Data_C. The data patch P(C,A) is a binary data patch that changes the data set Data_C to the data set Data_A.

Then, the electronic device generates a light version file File_LV_B for the model M_B according to the compiled files File_A and File_B, and generates a light version file File_LV_C for the model M_C according to the compiled files File_A and File_C. The light version file File_LV_B comprises the data patches P(A,B) and P(B,A) and the command set Command_B, and the light version file File_LV_C comprises the data patches P(A,C) and P(C,A) and the command set Command_C. The electronic device stores the compiled file File_A and the light version files File_LV_B and File_LV_C to a storage device (not shown) in the electronic device.

Then, the electronic device loads the compiled file File_A from the storage device to the memory in the runtime RT1 during inferring the model M_A. Specifically, the data set Data_A and the command set Command_A are loaded to (or stored in) the memory spaces SP1 and SP2, respectively. The electronic device optionally executes the model M_A according to the data set Data_A and the command set Command_A. The electronic device loads the light version file File_LV_B from the storage device to the memory in the runtime RT2 during inferring the model M_B. Specifically, the data patches P(A,B) and P(B,A) are loaded to (or stored in) the memory spaces SP3 and SP4, and the command set Command_B is loaded to (or stored in) the memory space SP5. The electronic device generates the data set Data_B according to the data set Data_A and the data patch P (A,B), if there is a need to switch the model M_A to the model M_B. The electronic device replaces the data set Data_A with the data set Data_B in the memory space SP1, and executes the model M_B according to the data set Data_B in the memory space SP1 and the command set Command _B in the memory space SP5.

Further, as an alternative, the electronic device generates (or recovers) the data set Data_A according to the data set Data_B in the memory space SP1 and the data patch P (B,A) in the memory space SP4, if there is a need to switch back to the model M_A from the model M_B or switch to the model M_C from the model M_B. The electronic device replaces the data set Data_B with the data set Data_A in the memory space SP1, and executes the model M_A according to the data set Data_A in the memory space SP1 and the command set Command_A in the memory space SP2.

Furthermore, the electronic device loads the light version file File_LV_C from the storage device to the memory in the runtime RT3 during inferring the model M_C. Specifically, the data patches P(A,C) and P(C,A) are loaded to (or stored in) the memory space SP6 and SP7, and the command set Command_C is loaded to (or stored in) the memory space SP8. The electronic device generates the data set Data_C according to the data set Data_A and the data patch P(A,C), if there is a need to switch the model M_A to the model M_C. The electronic device replaces the data set Data_A with the data set Data_C in the memory space SP1, and executes the model M_C according to the data set Data_C in the memory space SP1 and the command set Command_C in the memory space SP8.

The electronic device generates (or recovers) the data set Data_A in the memory space RT3_3 according to the data set Data_C in the memory space SP1 and the data patch P (C,A) in the memory space SP7, if there is a need to switch back to the model M_A from the model M_C or switch to the model M_B from the model M_C. The electronic device replaces the data set Data_C with the data set Data_A in the memory space SP1, and executes the model M_A according to the data set Data_A in the memory space SP1 and the command set Command_A in the memory space SP2.

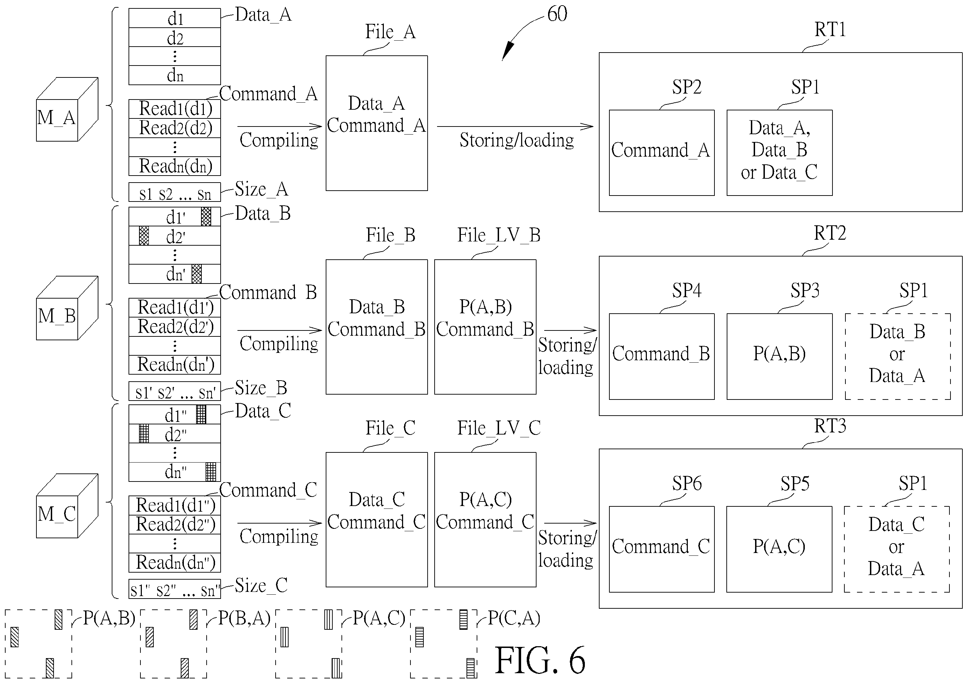

FIG. 6 is a schematic diagram of a scenario 60 according to an embodiment of the disclosure. In FIG. 6, a model M_A can be seen as an original/main AI model, and models M_B and M_C can be seen as replaced AI models. The models M_A, M_B and M_C can be referred to the models M_A, M_B and M_C in FIG. 5, and are not narrated herein for brevity. In FIG. 6, there are six memory spaces SP1-SP6 of a memory in an electronic device and three runtimes RT1-RT3.

First, the electronic device (e.g., a processing circuit in the electronic device) compiles the models M_A, M_B and M_C to compiled files File_A, File_B and File_C, respectively. The compiled file File_A comprises the data set Data_A and the command set Command_A. The compiled file File_B comprises the data set Data_B and the command set Command_B. The compiled file File_C comprises the data set Data_C and the command set Command_C. The electronic device generates data patches P(A,B) and P(B,A) according to the data sets Data_A and Data_B (e.g., the slash parts of the data set Data_B), and generates data patches P(A,C) and P(C,A) according to the data sets Data_A and Data_C (e.g., the slash parts of the data set Data_C). The data patches P(A,B), P(B,A), P(A,C) and P(C,A) can be referred to the data patches P(A,B), P(B,A), P(A,C) and P(C,A) in FIG. 6, and are not narrated herein for brevity.

Then, the electronic device generates a light version file File_LV_B for the model M_B according to the compiled files File_A and File_B, and generates a light version file File_LV_C for the model M_C according to the compiled files File_A and File_C. The light version file File_LV_B comprises the data patch P(A,B) and the command set Command_B, and the light version file File_LV_C comprises the data patch P(A,C) and the command set Command_C. The electronic device stores the compiled file File_A, the light version files File_LV_B and File_LV_C and the data patches P(B,A) and P(C,A) to a storage device (not shown) in the electronic device. The electronic device loads the compiled file File_A from the storage device to the memory in the runtime RT1 during inferring the model M_A. Specifically, the data set Data_A and the command set Command_A are loaded to (or stored in) the memory spaces SP1 and SP2, respectively. The electronic device optionally executes the model M_A according to the data set Data_A and the command set Command_A.

The electronic device loads the light version file File_LV_B from the storage device to the memory in the runtime RT2 during inferring the model M_B. Specifically, the data patch P(A,B) and the command set Command_B are loaded to (or stored in) the memory spaces SP3 and SP4, respectively. The electronic device generates the data set Data_B according to the data set Data_A and the data patch P (A,B), if there is a need to switch the model M_A to the model M_B. The electronic device replaces the data set Data_A with the data set Data_B in the memory space SP1, and executes the model M_B according to the data set Data_B in the memory space SP1 and the command set Command_B in the memory space SP4.

Further, as an alternative, the electronic device loads the data patch P (B,A) from the storage device to a memory space SP7 (not shown) of the memory and generates (or recovers) the data set Data_A according to the data set Data_B in the memory space SP1 and the data patch P(B,A) in the memory space SP7, if there is a need to switch back to the model M_A from the model M_B or switch to the model M_C from the model M_B. The electronic device replaces the data set Data_B with the data set Data_A in the memory space SP1, and executes the model M_A according to the data set Data_A in the memory space SP1 and the command set Command_A in the memory space SP2.

Furthermore, the electronic device loads the light version file File_LV_C from the storage device to the memory in the runtime RT3 during inferring the model M_C. Specifically, the data patch P(A,C) and the command set Command_C are loaded to (or stored in) the memory spaces SP5 and SP6, respectively. The electronic device generates the data set Data_C according to the data set Data_A and the data patch P(A,C), if there is a need to switch the model M_A to the model M_C. The electronic device replaces the data set Data_A with the data set Data_C in the memory space SP1, and executes the model M_C according to the data set Data_C in the memory space SP1 and the command set Command_C in the memory space SP6.

The electronic device loads the data patch P(C,A) from the storage device to a memory space SP8 (not shown) of the memory and generates (or recovers) the data set Data_A according to the data set Data_C and the data patch P(C,A), if there is a need to switch back to the model M_A from the model M_C or switch to the model M_B from the model M_C. The electronic device replaces the data set Data_C with the data set Data_A in the memory space SP1, and executes the model M_A according to the data set Data_A in the memory space SP1 and the command set Command_A in the memory space SP2.

In FIGs. 5 and 6, the electronic device loads at least one data patch (such as, the data patch P(A,B) or P(A,B)) which is comprised in the at least one light version file instead of the data set (such as, the data set Data_B or Data_C). An overhead of the electronic device to switch AI models (such as, switch from the model M_A to the model M_B, or switch from the model M_A to the model M_C) can be reduced, because the size of the at least one data patch is smaller than the size of data set. Besides, the data sets Data_A, Data_B and Data_C share the same memory space SP1 to further reduce cost. That is, data in the memory space SP1 may be replaced by new data, if there is a need to switch AI models. In FIGs. 5 and 6, the electronic device needs to switch back to the model M_A first from the model M_B and then switch to the model M_C from the model M_A, if there is a need to switch to the model M_C from the model M_B. That is, the model M_C cannot be switched from the model M_B directly. By the same token, the model M_B cannot be switched from the model M_C directly.

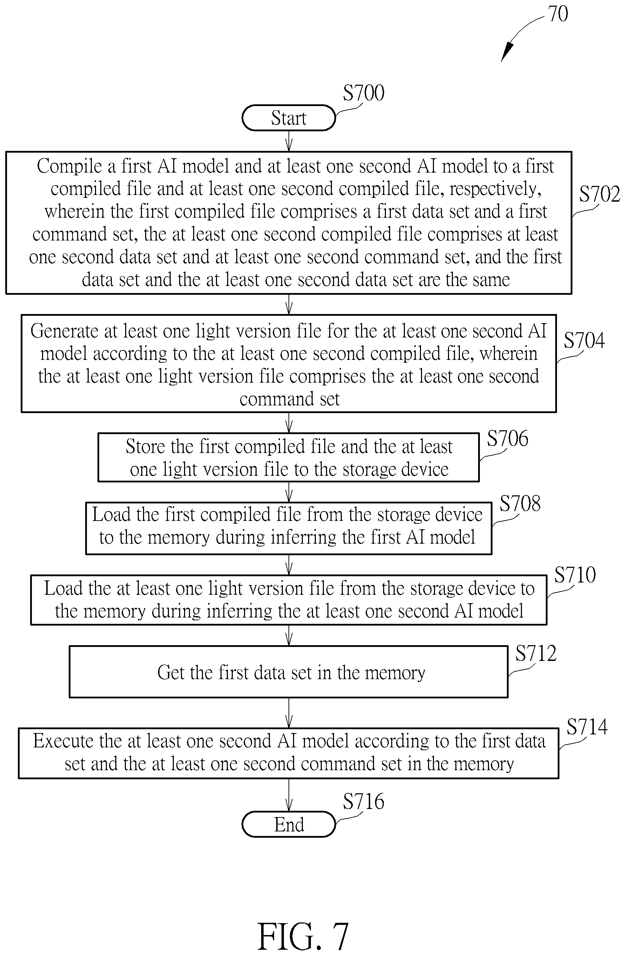

FIG. 7 is a flowchart of a process 70 utilized in an electronic device (e.g., the electronic device 10 in FIG. 1, and more particularly, a processing circuit 120 in the electronic device 10) according to an embodiment of the disclosure, to handling AI model switching. Provided that the result is substantially the same, the steps are not required to be executed in the exact order shown in FIG. 7. The process 70 comprises the following steps:
Step S700: Start.
Step S702: Compile a first AI model (e.g., an original/main AI model) and at least one second AI model (e.g., at least one replaced AI model) to a first compiled file and at least one second compiled file, respectively, wherein the first compiled file comprises a first data set and a first command set, the at least one second compiled file comprises at least one second data set and at least one second command set, and the first data set and the at least one second data set are the same.
Step S704: Generate at least one light version file for the at least one second AI model according to the at least one second compiled file, wherein the at least one light version file comprises the at least one second command set.
Step S706: Store the first compiled file and the at least one light version file to the storage device.
Step S708: Load the first compiled file from the storage device to the memory during inferring (e.g., inferencing) the first AI model.
Step S710: Load the at least one light version file from the storage device to the memory during inferring (e.g., inferencing) the at least one second AI model.
Step S712: Get (or obtain) the first data set in the memory, e.g., if there is a need to switch the first AI model to the at least one second AI model.
Step S714: Execute the at least one second AI model according to the first data set and the at least one second command set in the memory.
Step S716: End.

The processing circuit in the electronic device is configured to perform steps of the process 70. According to the process 70, the processing circuit in the electronic device does not load any data patch and the at least one second data set, in response to the first data set and the at least one second data set being the same. An overhead of the electronic device to switch AI models can be reduced.

Realization of the process 70 is not limited to the above description. The following embodiments of the disclosure and/or preferred features, which may be combined in any suitable way to or with an embodiment of the disclosure, may be applied to realize the process 70.

Preferably, the first AI model (e.g., an original/main AI model) comprises the first data set, a first size list and the first command set. Preferably, the at least one second AI model comprises the at least one second data set, at least one second size list and the at least one second command set. In detail, each of the at least one second AI model comprises one data set, one size list and one command set and different second AI model may comprise different data set or command set, if the number of the at least one second AI model is more than one. The at least one second AI model comprises one data set, one size list and one command set, if the number of the at least one second AI model is one. Preferably, the first command set and the at least one second command set are the same. Alternatively preferably, the first command set and the at least one second command set are different.

Preferably, the first size list indicates sizes of data in the first data set. Preferably, the at least one second size list indicates sizes of data in the at least one second data set. Preferably, the first size list and the at least one second size list are utilized for comparing the data in the first data set and the data in the at least one second data set. Preferably, the first size list and the at least one second size list are the same. Preferably, the data in the first data set correspond to commands in the first command set, respectively. Preferably, the data in the at least one second data set correspond to commands in the at least one second command set, respectively.

Preferably, the processing circuit in the electronic device uses the first data set in the memory as the at least one second data set, because the first data set and the at least one second data set are the same. Preferably, the first command set and the at least one second command set are stored (or loaded) separately. For example, the first command set is stored in a space of the memory, and each of the at least one second command set is stored in a different space of the memory. Preferably, a first runtime for inferring the first AI model is different from at least one second runtime for inferring the at least one second AI model.

Preferably, the processing circuit in the electronic device obtains the first data set directly after executing the at least one second AI model, e.g., if there is a need to switch back to the first AI model from the at least one second AI model. Preferably, the processing circuit in the electronic device executes the first AI model according to the first data set and the first command set, after obtaining the first data set and the first command set stored in the memory.

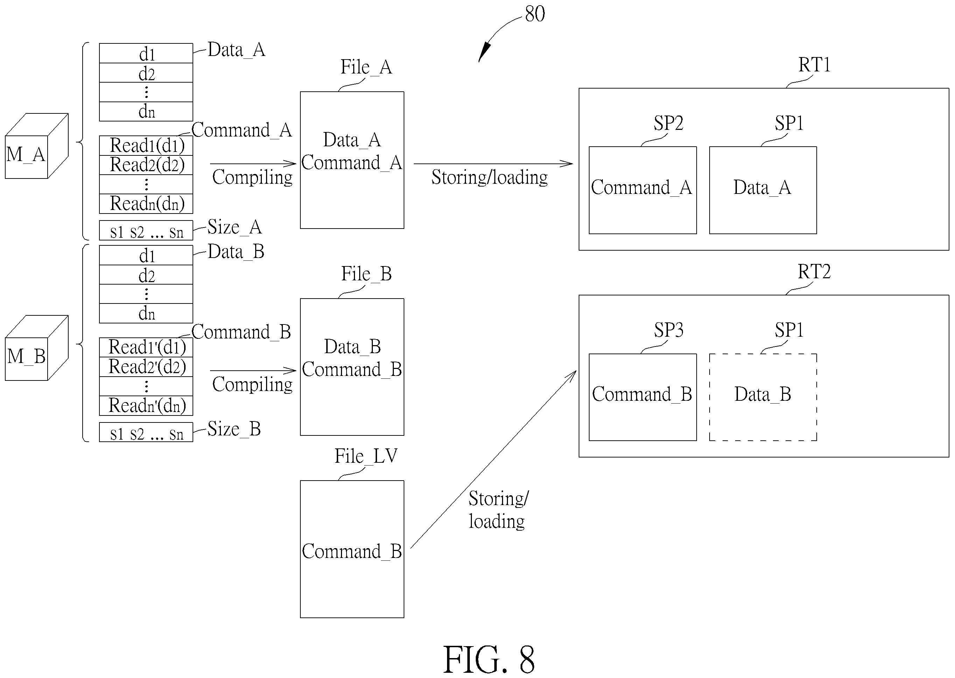

FIG. 8 is a schematic diagram of a scenario 80 according to an embodiment of the disclosure. In FIG. 8, there are two models M_A and M_B. The model M_A can be seen as an original/main AI model, and the model M_B can be seen as a replaced AI model. The model M_A comprises a data set Data_A with data d₁-dₙ, a size list Size_A with sizes s₁-sₙ and a command set Command_A with commands Read₁(d₁)-Readₙ(dₙ). The model M_B comprises a data set Data_B with the data d₁-dₙ, a size list Size_B with the sizes s₁-sₙ and a command set Command_B with commands Read₁'(d₁)-Readₙ'(dₙ). The data set Data_A is the same as the data set Data_B, while the command set Command_A is different from the command set Command_B. In FIG. 8, there are three memory spaces SP1-SP3 of a memory in an electronic device and two runtimes RT1 and RT2.

First, the electronic device (e.g., a processing circuit in the electronic device) compiles the models M_A and M_B to compiled files File_A and File_B, respectively. The compiled file File_A comprises the data set Data_A and the command set Command_A, and the compiled file File_B comprises the data set Data_B and the command set Command_B. The electronic device generates a light version file File_LV according to File_B. The light version file File_LV comprises the command set Command_B. The electronic device stores the compiled file File_A and the light version file File_LV to a storage device (not shown) in the electronic device.

Then, the electronic device loads the compiled file File_A from the storage device to the memory in the runtime RT1 during inferring the model M_A. Specifically, the data set Data_A and the command set Command_A are loaded to (or stored in) the memory spaces SP1 and SP2, respectively. The electronic device optionally executes the model M_A according to the data set Data_A and the command set Command_A. The electronic device loads the light version file File_LV from the storage device to the memory in the runtime RT2 during inferring the model M_B. Specifically, the command set Command_B is loaded to (or stored in) the memory spaces SP3. Because the data sets Data_A and Data_B are the same, the electronic device obtains the data set Data_A in the memory space SP1 and uses it as Data_B if there is a need to switch the model M_A to the model M_B. The electronic device executes the model M_B according to the data set Data_A in the memory space SP1 and the command set Command_B in the memory space SP3.

Further, as an alternative, because the data sets Data_A and Data_B are the same, the electronic device executes the model M_A directly according to the data set Data_A in the memory space SP1 and the command set Command_A in the memory space SP2 without recovering the data set Data_A if there is a need to switch back to the model M_A from the model M_B.

In FIG.8, since no data patch or data set is loaded into memory when switch AI models, an overhead of the electronic device to switch AI models (such as, switch from model M_A to model M_B) can be reduced.

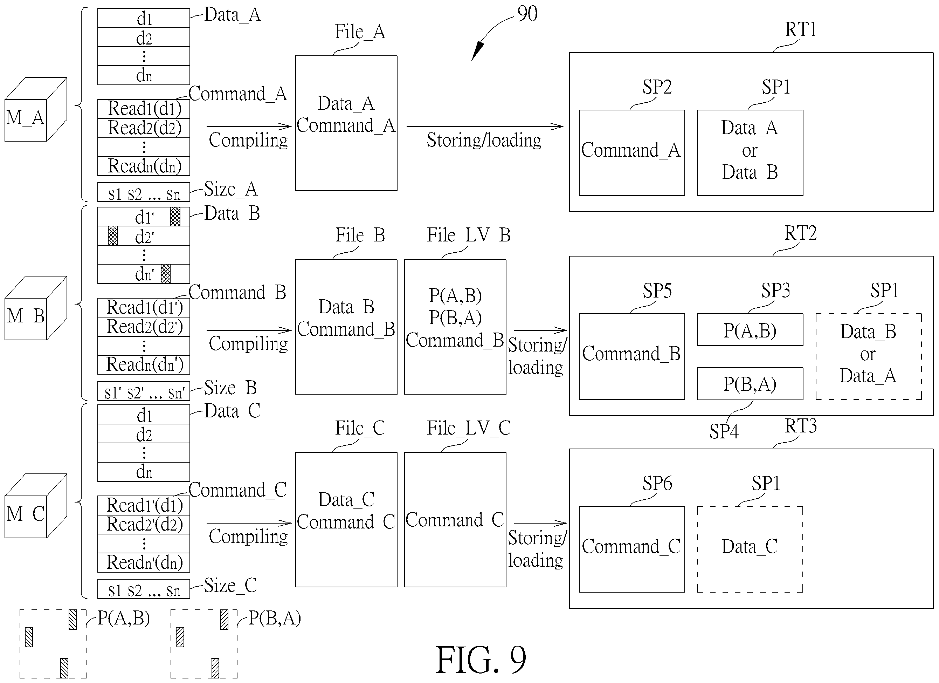

FIG. 9 is a schematic diagram of a scenario 90 according to an embodiment of the disclosure. In FIG. 9, there are three models M_A, M_B and M_C. The model M_A can be seen as an original/main AI model, and the models M_B and M_C can be seen as replaced AI models. The model M_A comprises a data set Data_A with data d₁-dₙ, a size list Size_A with sizes s₁-sₙ and a command set Command_A with commands Read₁(d₁)-Readₙ(dₙ). The model M_B comprises a data set Data_B with data d₁'-dₙ', a size list Size_B with sizes s₁'-sₙ' and a command set Command_B with commands Read₁(d₁')-Readₙ(dₙ'). The model M_C comprises a data set Data_C with the data d₁-dₙ, a size list Size_C with the sizes s₁-sₙ and a command set Command_C with commands Read₁'(d₁)-Readₙ'(dₙ). The data set Data_A is different from the data set Data_B, while the command set Command_A is the same as the command set Command_B. The slash parts of the data set Data_B represent differences between the data sets Data_A and Data_B. The data set Data_A is the same as the data set Data_C, while the command set Command_A is different from the command set Command_C. In FIG. 9, there are six memory spaces SP1-SP6 of a memory in an electronic device and three runtimes RT1-RT3.

First, the electronic device (e.g., a processing circuit in the electronic device) compiles the models M_A, M_B and M_C to compiled files File_A, File_B and File_C, respectively. The compiled file File_A comprises the data set Data_A and the command set Command_A. The compiled file File_B comprises the data set Data_B and the command set Command_B. The compiled file File_C comprises the data set Data_C and the command set Command_C. The electronic device generates data patches P (A,B) and P (B,A) according to the data sets Data_A and Data_B (e.g., the slash parts of the data set Data_B). The data patch P(A,B) is a binary data patch that changes the data set Data_A to the data set Data_B. The data patch P(B,A) is a binary data patch that changes the data set Data_B to the data set Data_A. The electronic device generates a light version file File_LV_B for the model M_B according to the compiled files File_A and File_B, and generates a light version file File_LV_C for the model M_C according to the compiled files File_A and the compiled file File_C. The light version file File_LV_B comprises the data patches P(A,B) and P(B,A) and the command set Command_B, and the light version file File_LV_C comprises the command set Command_C. The electronic device stores the compiled file File_A and the light version files File_LV_B and File_LV_C to a storage device (not shown) in the electronic device.

Then, the electronic device loads the compiled file File_A from the storage device to the memory in the runtime RT1 during inferring the model M_A. Specifically, the data set Data_A and the command set Command_A are loaded to (or stored in) the memory spaces SP1 and SP2, respectively. The electronic device optionally executes the model M_A according to the data set Data_A and the command set Command_A. The electronic device loads the light version file File_LV_B from the storage device to the memory in the runtime RT2 during inferring the model M_B. Specifically, the data patches P (A,B) and P(B,A) are loaded to (or stored in) the memory spaces SP3 and SP4, and the command set Command_B is loaded to (or stored in) the memory space SP5. The electronic device generates the data set Data_B according to the loaded data set Data_A and the data patch P(A,B), if there is a need to switch the model M_A to the model M_B. The electronic device replaces the data set Data_A with the data set Data_B in the memory space SP1, and executes the model M_B according to the data set Data_B in the memory space SP1 and the command set Command_B in the memory space SP5.

Further, as an alternative, the electronic device generates (or recovers) the data set Data_A according to the data set Data_B in the memory space SP1 and the data patch P (B,A) in the memory space SP4, if there is a need to switch back to the model M_A from the model M_B or switch to the model M_C from the model M_B. The electronic device replaces the data set Data_B with the data set Data_A in the memory space SP1, and executes the model M_A according to the data set Data_A in the memory space SP1 and the command set Command_A in the memory space SP2.

Furthermore, the electronic device loads the light version file File_LV_C from the storage device to the memory in the runtime RT3 during inferring the model M_C. Specifically, the command set Command_C is loaded to (or stored in) the memory space SP6. Because the data sets Data_A and Data_C are the same, the electronic device obtains the data set Data_A in the memory space SP1 directly if there is a need to switch to the model M_C from the model M_A. The electronic device executes the model M_C according to the data set Data_A in the memory space SP1 and the command set Command_C in the memory space SP6.

Because the data sets Data_A and Data_C are the same, the electronic device executes the model M_A directly according to the data set Data_A in the memory space SP1 and the command set Command_A in the memory space SP2 without recovering the data set Data_A if there is a need to switch back to the model M_A from the model M_C.

In FIG. 9, the electronic device loads at least one data patch (such as, the data patch P(A,B)) which is comprised in the at least one light version file instead of the data set (such as, the data set Data_B). An overhead of the electronic device to switch AI models (such as, switch from the model M_A to the model M_B) can be reduced, because the size of the at least one data patch is smaller than the size of data set. Besides, the data sets Data_A and Data_B share the same memory space RT1_1. That is, data in the memory space SP1 may be replaced by new data, if there is a need to switch AI models. Besides, since no data patch or data set is loaded into memory when switches from model M_A to model M_C, an overhead of the electronic device can be further reduced.

In FIG. 9, the electronic device needs to switch back to the model M_A first from the model M_B and then switch to the model M_C from the model M_A, if there is a need to switch to the model M_C from the model M_B. That is, the model M_C cannot be switched from the model M_B directly. By the same token, the model M_B cannot be switched from the model M_C directly.

To sum up, the disclosure provides an electronic communication device and a method for handling AI model switching. The electronic communication generates data patch(es) which represents difference(s) between an original/main AI model and replaced AI model(s). The electronic communication loads the data patch(es) instead of data set(s) for the replaced AI model(s), and generates the data set(s) for the replaced AI model(s) according to the data patch(es) during AI models switching when the AI model replaced AI model(s) have different data set as the original AI model. The electronic communication loads no data patch or data set during AI models switching when the AI model replaced AI model(s) have different command as the original AI model. Therefore, data/command sets for AI models can be reused efficiently and an overhead of the electronic device to switch the AI models can be reduced, enabling efficient AI model switching on the electronic device. The disclosure ensures a negligible overhead and a minimal memory footprint when switching AI models, without a developer intervention to modify the AI models.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. An electronic device (10), comprising:
a storage device (100);
a memory (110); and
a processing circuit (120), coupled to the storage device (100) and the memory (110), and configured to execute instructions:
compiling a first artificial intelligence, in the following also referred to as AI, model and at least one second AI model to a first compiled file and at least one second compiled file, respectively, wherein the first compiled file comprises a first data set and a first command set, and the at least one second compiled file comprises at least one second data set and at least one second command set;
generating at least one light version file for the at least one second AI model according to the first compiled file and the at least one second compiled file, wherein the at least one light version file comprises the at least one second command set and at least one data patch;
storing the first compiled file and the at least one light version file to the storage device;
loading the first compiled file from the storage device to the memory during inferring the first AI model;
loading the at least one light version file from the storage device to the memory during inferring the at least one second AI model;
generating the at least one second data set according to the first data set and the at least one data patch in the memory; and
executing the at least one second AI model according to the generated at least one second data set and the at least one second command set in the memory.

2. A method for handling artificial intelligence, in the following also referred to as AI, model switching for an electronic device, comprising:
compiling a first AI model and at least one second AI model to a first compiled file and at least one second compiled file, respectively, wherein the first compiled file comprises a first data set and a first command set, and the at least one second compiled file comprises at least one second data set and at least one second command set (S202);
generating at least one light version file for the at least one second AI model according to the first compiled file and the at least one second compiled file, wherein the at least one light version file comprises the at least one second command set and at least one data patch (S204);
storing the first compiled file and the at least one light version file to a storage device in the electronic device (S206);
loading the first compiled file from the storage device to a memory in the electronic device during inferring the first AI model (S208);
loading the at least one light version file from the storage device to the memory during inferring the at least one second AI model (S210);
generating the at least one second data set according to the first data set and the at least one data patch in the memory (S212) ; and
executing the at least one second AI model according to the generated at least one second data set and the at least one second command set in the memory (S216).

3. The electronic device of claim 1, wherein the instructions further comprise:
storing the generated at least one second data set to the memory to replace the first data set; or
the method of claim 2, further comprising:
storing the generated at least one second data set to the memory to replace the first data set (S214).

4. The electronic device of claim 1 or 3, or the method of claim 2 or 3, wherein the first AI model comprises the first data set, a first size list and the first command set, and the at least one second AI model comprises the at least one second data set, at least one second size list and the at least one second command set.

5. The electronic device of any one of claims 1, 3 and 4, or the method of anyone of claims 2 to 4, wherein the at least one data patch comprises at least one first data patch.

6. The electronic device or the method of claim 5, wherein the at least one first data patch indicates at least one first difference between the first data set and the at least one second data set, and is utilized for changing the first data set to the at least one second data set.

7. The electronic device or the method of claim 5 or 6, wherein the at least one data patch further comprises at least one second data patch, and the at least one second data patch indicates at least one second difference between the at least one second data set and the first data set, and is utilized for changing the at least one second data set to the first data set.

8. The electronic device of claim 7, wherein the instructions further comprise:
generating the first data set according to the at least one second data set and the at least one second data patch, after executing the at least one second AI model; or
the method of claim 7, further comprising:
generating the first data set according to the at least one second data set and the at least one second data patch, after executing the at least one second AI model.

9. The electronic device of claim 8, wherein the instructions further comprise:
storing the first data set to the memory to replace the at least one second data set, after generating the first data set according to the at least one second data set and the at least one second data patch, and
executing the first AI model according to the stored first data set and the first command set in the memory; or
the method of claim 8, further comprising:
storing the first data set to the memory to replace the at least one second data set, after generating the first data set according to the at least one second data set and the at least one second data patch, and
executing the first AI model according to the stored first data set and the first command set in the memory.

10. The electronic device of any one of claims 1 and 3 to 9, or the method of anyone of claims 2 to 9, wherein a size of the at least one data patch is smaller than a size of the at least one second data set.

11. An electronic device (10), comprising:
a storage device (100);
a memory (110); and
a processing circuit (120), coupled to the storage device (100) and the memory (110), and configured to execute instructions:
compiling a first artificial intelligence, in the following also referred to as AI, model and at least one second AI model to a first compiled file and at least one second compiled file, respectively, wherein the first compiled file comprises a first data set and a first command set, the at least one second compiled file comprises at least one second data set and at least one second command set, and the first data set and the at least one second data set are the same;
generating at least one light version file for the at least one second AI model according to the at least one second compiled file, wherein the at least one light version file comprises the at least one second command set;
storing the first compiled file and the at least one light version file to the storage device;
loading the first compiled file from the storage device to the memory during inferring the first AI model;
loading the at least one light version file from the storage device to the memory during inferring the at least one second AI model;
getting the first data set in the memory; and
executing the at least one second AI model according to the first data set and the at least one second command set in the memory.

12. A method for handling artificial intelligence, in the following also referred to as AI, model switching for an electronic device, comprising:
compiling a first artificial intelligence, in the following also referred to as AI, model and at least one second AI model to a first compiled file and at least one second compiled file, respectively, wherein the first compiled file comprises a first data set and a first command set, the at least one second compiled file comprises at least one second data set and at least one second command set, and the first data set and the at least one second data set are the same (S702);
generating at least one light version file for the at least one second AI model according to the at least one second compiled file, wherein the at least one light version file comprises the at least one second command set (S704);
storing the first compiled file and the at least one light version file to the storage device (S706);
loading the first compiled file from the storage device to the memory during inferring the first AI model (S708);
loading the at least one light version file from the storage device to the memory during inferring the at least one second AI model (S710);
getting the first data set in the memory (S712); and
executing the at least one second AI model according to the first data set and the at least one second command set in the memory (S714).

13. The electronic device of claim 11, or the method of claim 12, wherein the first AI model comprises the first data set, a first size list and the first command set, and the at least one second AI model comprises the at least one second data set, at least one second size list and the at least one second command set.

14. The electronic device of claim 11 or 13, wherein the instructions further comprise:
obtaining the first data set directly, after executing the at least one second AI model; or
the method of claim 12 or 13, further comprising:
obtaining the first data set directly, after executing the at least one second AI model.

15. The electronic device of claim 14, wherein the instructions further comprise:
executing the first AI model according to the first data set and the first command set, after obtaining the first data set and the first command set stored in the memory; or
the method of claim 14, further comprising:
executing the first AI model according to the first data set and the first command set, after obtaining the first data set and the first command set stored in the memory.
